# EUROPÄISCHE PATENTSCHRIFT

(11) **EP 1 491 830 B1**
(45) Veröffentlichungstag und Bekanntmachung des Hinweises auf die Patenterteilung: **23.08.2006**
(21) Anmeldenummer: 04014526.0
(22) Anmeldetag: 29.05.2002
(51) Int. Cl.: F24H 9/20, A47J 27/21

(54) **Elektrischer Heisswasserbereiter**
Electrical hot water heater
Chauffe-eau électrique

(30) Priorität: 30.05.2001 DE 10126333
(43) Veröffentlichungstag der Anmeldung: 29.12.2004
(62) Teilanmeldung aus: 02011971.5
(73) Patentinhaber: BSH Bosch und Siemens Hausgeräte GmbH, 81739 München (DE)
(72) Erfinder: Helminger, Markus, 83313 Siegsdorf (DE); Lindert, Christian, 83126 Flintsbach am Inn (DE)

(56) Entgegenhaltungen:
- US-A- 5 949 960

## Beschreibung

Die Erfindung betrifft einen elektrischen Heißwasserbereiter nach dem Oberbegriff des Anspruchs 1.

Bei einem derartigen Heißwasserbereiter ist es nachteilig, wenn die Heizeinrichtung ohne Wasser betrieben wird. Dies kann bei einem derartigen Heißwasserbereiter zum Anschluss an ein Wasserversorgungsnetz insbesondere bei der ersten Inbetriebnahme geschehen, wenn der Heißwasserbereiter an das Wasserversorgungsnetz angeschlossen, jedoch noch nicht mit Wasser gefüllt wurde. In einem solchen Fall wird die von der Heizeinrichtung erzeugte Wärme nicht abgeführt und es kann zu einer Überhitzung der Heizeinrichtung kommen. Um dies zu vermeiden, ist es bekannt, der Heizeinrichtung einen Temperaturschalter zuzuordnen, der im Fall einer Übertemperatur die Stromzufuhr der Heizeinrichtung unterbricht.

Um einer Beschädigung bei der Inbetriebnahme eines Heißwasserbereiters entgegen zu wirken, wenn der Heißwasserbereiter noch nicht mit Wasser gefüllt ist, umfasst der aus der US 5,949,960 bekannte Heißwasserbereiter eine wasserlösliche Substanz, z.B. ein Zuckerstück, so dass der Heißwasserbereiter erst dann eingeschaltet werden kann, wenn die wasserlösliche Substanz aufgelöst ist.

Weiterhin ist es zur Einhaltung von Sicherheitsvorschriften bekannt, diesen Temperaturschalter so auszugestalten, dass er sich nicht von selbst wieder zurücksetzt bzw. einschaltet, wenn die Temperatur wieder unter seine Schalttemperatur fällt. Dies erfordert nachteiligerweise nach einem Ansprechen das manuelle Rücksetzen oder den Austausch des Temperaturschalters, wozu in der Regel der Kundendienst nötig ist. Um dies zu vermeiden, ist es bekannt, einen Temperaturschalter einzusetzen, der sich nach seinem Ansprechen solange im Aus-Zustand hält, bis der Heißwasserbereiter für eine bestimmte Zeitdauer von der Stromversorgung getrennt wird. Auf diese Weise bleibt der Temperaturschalter nach seinem Ansprechen im Aus-Zustand und kann dennoch mit vergleichsweise geringem Aufwand wieder in den Ein-Zustand überführt werden, indem der Heißwasserbereiter wenigstens die bestimmte Zeitdauer von der Stromversorgung getrennt wird. Ein solcher Schalter ist nachteiligerweise mit einem hohen Aufwand verbunden und verbraucht in seinem selbsthaltenden Aus-Zustand weiter Strom. Zusätzlich erfordert das Zurücksetzen die Kenntnis über das Verfahren zum Zurücksetzen des selbsthaltenden Temperaturschalters, die gerade bei Benutzern, die bereits die Unachtsamkeit begangen haben, den Heißwasserbereiter ohne Wasser in Betrieb zu nehmen, häufig nicht vorhanden ist.

Der vorliegenden Erfindung liegt die Aufgabe zugrunde, einen Heißwasserbereiter der eingangs genannten Art zu schaffen, der im Fall einer Fehlbedienung das Risiko einer Überhitzung verringert und zur Verringerung der Anzahl der Kundendienstfälle beiträgt.

Erfindungsgemäß wird diese Aufgabe durch einen Heißwasserbereiter mit den Merkmalen des Patentanspruchs 1 gelöst. Vorteilhafte Weiterbildungen und Ausgestaltungen der vorliegenden Erfindung sind in den Unteransprüchen definiert. Der Heißwasserbereiter kann beispielsweise ein offener Kleinspeicher, ein Durchlauferhitzer oder allgemein ein Gerät zum Erhitzen von Wasser insbesondere mit einer festen Verbindung zu einem Wasseranschluss ein.

Der Heißwasserbereiter ist so eingerichtet, dass der Fühlerkörper durch einen Staudruck des in den Behälter einströmenden Wassers von einer ersten Position in eine zweite Position versetzbar ist.

In der ersten Position des Fühlerkörpers ist das Betätigungselement gegen den Fühlerkörper in Richtung der Ein-Stellung vorgespannt. In der zweiten Position des Fühlerkörpers ist das Betätigungselement vom Fühlerkörper freigegeben und der Schalter kann in seine Ein-Stellung gelangen. Vor der ersten Montage des Heißwasserbereiters befindet sich der Fühlerkörper in der ersten Position, in der das Betätigungselement gegen den Fühlerkörper in Richtung der Ein-Stellung des Schalters vorgespannt ist. In der ersten Position bewirkt der Fühlerkörper also, dass der Schalter sich in der Aus-Stellung befindet. Nachdem der Heißwasserbereiter montiert ist und erstmalig Wasser in den Innenraum des Behälters einströmen kann, wird der Fühlerkörper aufgrund des entstehenden Staudruckes des in den Behälter einströmenden Wassers aus der ersten Position herausbewegt und das Betätigungselement des Schalters freigegeben. Nachdem der Fühlerkörper seine erste Position verlassen hat, bewegt sich das vorgespannte Betätigungselement in Richtung der Ein-Stellung des Schalters. In der Ein-Stellung des Schalters ist die Stromzufuhr zu der Heizeinrichtung nicht mehr unterbrochen. Der besondere Vorteil eines solchen durch den Staudruck des einströmenden Wassers versetzbaren Fühlerkörpers ist es, dass der Fühlerkörper erhalten bleibt.

Ein derartiger Fühlerkörper kann nach einer ersten Demontage des Heißwasserbereiters und vor einer weiteren Montage erneut in die erste Position gebracht werden, um seine Sicherungsfunktion auch nach einer erneuten Montage des Heißwasserbereiters zu erfüllen. Dazu kann der Fühlerkörper von außen leicht zugänglich ausgebildet sein. Beispielsweise kann der Fühlerkörper einen von seiner Mantelfläche ausgehenden sich radial nach außen erstreckenden Stift aufweisen, der in abgedichteter Weise aus dem Gehäuse herausragt und von außen betätigt werden kann. Der Fühlerkörper kann an seinem in die Richtung der ersten Position weisenden Ende kegelförmig ausgebildet sein, um das Betätigungselement des Schalters durch die Bewegung des Fühlerkörpers in die Aus-Stellung zu bewegen. Alternativ kann das Betätigungselement des Schalters auch eine eigene Handhabe aufweisen, mittels der das Betätigungselement in die Aus-Stellung bewegt werden kann. Der Fühlerkörper ist insbesondere aus einem nicht löslichen, lebensmittelechten Material hergestellt. Dies kann beispielsweise Polypropylen sein.

In einer Ausgestaltung eines solchen Heißwasserbereiters ist der Fühlerkörper in einem Zulaufkanal für das Wasser angeordnet und hält in seiner ersten Position ein in den Zulaufkanal hineinragendes Betätigungselement des Schalters in seiner Aus-Stellung. Durch die Anordnung des Fühlerkörpers in einem Zulaufkanal für das Wasser in den Innenraum des Behälters des Heißwasserbereiters kann der Staudruck des einströmenden Wassers am leichtesten realisiert werden. Durch die Anordnung des Fühlerkörpers in den Zulaufkanal für das Wasser, kann der gesamt zur Verfügung stehende Druck des Wassers aus der an den Heißwasserbereiter angeschlossenen Wasserleitung genutzt werden.

In der zweiten Position des Fühlerkörpers kann dieser in einem Auffangraum aufgenommen sein, wobei der Zulaufkanal für ein Einströmen des Wassers in den Innenraum des Behälters freigegeben ist. Der im Zulaufkanal befindliche Fühlerkörper wird aufgrund des Wasserdruckes aus seiner ersten Position herausbewegt, bis das Betätigungselement des Schalters freigegeben ist. Damit weiterhin ein störungsfreier Zulauf von Wasser in den Innenraum des Behälters möglich ist, wird der Fühlerkörper in seiner zweiten Position in einem Auffangraum aufgenommen. Der Auffangraum ist derart ausgebildet, dass der darin aufgenommene Fühlerkörper von dem zulaufenden Wasser umspült oder durchspült werden kann. Der Zulaufkanal ist für ein Einströmen des Wassers in den Innenraum des Behälters dabei stets freigegeben.

Bei einem rohrförmigen Zulaufkanal ist der Fühlerkörper vorzugsweise als axial verschiebbarer Zylinderkörper ausgebildet. Ähnlich eines Kolbens kann ein solcher Fühlerkörper aufgrund des Staudruckes des zuströmenden Wassers in axialer Richtung aus der ersten Position in eine zweite Position verschoben werden. Bei einer solchen axial verschiebbaren Ausbildung ist es in besonders einfacher Weise möglich, den Fühlerkörper aus seiner zweiten Position wieder in seine erste Position zurückzuführen.

Der axial verschiebliche Zylinderkörper kann vorzugsweise hohlzylindrisch ausgebildet sein, insbesondere kann der Zylinderkörper als Kunststoffspritzgussteil ausgebildet sein. Die Bodenfläche des hohlzylindrischen Zylinderkörpers kann ganz geschlossen ausgebildet sein, um einen maximalen Staudruck zu erzielen. Alternativ ist es jedoch auch möglich, die Bodenfläche mit einer Öffnung zu versehen, durch die einströmendes Wasser teilweise durch den Fühlerkörper hindurchtreten kann. Je nach Größe der Öffnung wird ein größerer oder kleinerer Staudruck am Fühlerkörper erzeugt Durch die Größe der Öffnung in der Bodenfläche des Zylinderkörpers ergibt sich ein bestimmter Staudruck an dem Fühlerkörper. Durch Verringerung des Staudrucks am Fühlerkörper wird dieser je nach Druck und Menge des einströmenden Wassers schneller oder langsamer von der ersten Position in die zweite Position bewegt. Vorteilhaft ist es, wenn der Fühlerkörper langsam aus seiner ersten Position in die zweite Position bewegt wird. Dadurch wird der Schalter erst dann in die Ein-Stellung bewegt, wenn eine gewisse Wassermenge in den Innenraum des Behälters eingeströmt ist. Dies stellt sicher, dass die Heizeinrichtung bereits von Wasser benetzt ist, ehe die Stromzufuhr zum Heizelement aufgrund der Ein-Stellung des Schalters ermöglicht ist.

Der Auffangraum, in dem Fühlerkörper in seiner zweiten Position aufgenommen ist, kann als ein im Durchmesser erweiterter Teil des Zulaufkanals ausgebildet sein. Durch diese Ausbildung wird zum einen sichergestellt, dass ein ausreichend großer Querschnitt offen bleibt, damit einströmendes Wasser in den Innenraum des Behälters strömen kann und der Fühlerkörper an einem definierten Ort gehalten wird. Dadurch soll verhindert werden, dass der Fühlerkörper mit dem Wasser in den Innenraum des Behälters hinausgeschwemmt wird. Insbesondere kann der Auffangraum ein Rückhaltemittel aufweisen, durch das ein Ausschwemmen des Fühlerkörpers aus dem Auffangraum in den Innenraum des Behälters verhindert ist. Bei Ausbildung des Auffangraumes als ein im Durchmesser erweiterter Teil des Zulaufkanals kann es sich um einen Absatz im erweiterten Zulaufkanal handeln, der einen verringerten Durchmesser aufweist. Der als verschiebbarer Zylinderkörper ausgebildete Fühlerkörper wird im Auffangraum in einer Position gehalten, aus der heraus der Fühlerkörper wieder zurück in seine erste Position verschiebbar ist.

Alternativ zu einer Anordnung des Fühlerkörpers an einem Einlauf zum Behälter kann der Fühlerkörper an einem Auslauf aus dem Behälter angeordnet sein. Ein dort angeordneter Fühlerkörper ist durch das aus dem Behälter ausströmende Wasser von einer ersten Position in eine zweite Position versetzbar. Diese Anordnung an einem Auslauf hat den Vorteil, dass der Fühlerkörper erst dann in seine zweite Position versetzt wird und der Schalter in die Ein-Stellung gelangen kann, wenn der Behälter bereits mit Wasser gefüllt ist. Dies stellt sicher, dass die im Behälter befindliche Heizeinrichtung erst dann mit Strom betrieben werden kann, wenn der Behälter zumindest teilweise gefüllt ist. Bei Anordnung des Fühlerkörpers am Auslauf, wird zunächst im Behälter befindliche Luft durch das einströmende Wasser verdrängt. Ist der Fühlerkörper geschlossen ausgebildet, d.h. der Fühlerkörper ist mit einer Dichtwirkung im Auslauf angeordnet, drückt ein Luftpolster bei einströmendem Wasser gegen den Fühlerkörper. Der Fühlerkörper kann dabei allein aufgrund des zunehmenden Druckes der Luft im Behälter aus seiner ersten Positionin seine zweite Position verschoben werden. Ist der Fühlerkörper mit eine ausreichend großen Öffnung ausgestattet, kann die aufgestaute Luft durch diese Öffnung entweichen und der Fühlerkörper wird durch die Luft nicht bewegt. Das bei vollständig gefülltem Behälter über den Auslauf austretende Wasser erzeugt an der Öffnung einen höheren Staudruck und der Fühlerkörper wird durch das Wasser in Richtung seiner zweiten Position bewegt. Bei dieser Variante ergibt sich der Vorteil, dass der Fühlerkörper erst dann den Schalter freigibt und die Heizeinrichtung betriebsbereit ist, wenn der Behälter bereits vollständig mit Wasser gefüllt ist. Wenn der Fühlerkörper am Auslauf des Wassererhitzers angeordnet ist, kann auch eine gesonderte Handhabe zum Zurückführen des Fühlerkörpers in die erste Position entfallen, da der Fühlerkörper über den Anschlussstutzen am Auslauf leicht zugänglich ist.

Nachfolgend sind zwei Ausführungsbeispiele der Erfindung anhand schematischer Darstellungen näher beschrieben. Darin zeigen:
- Fig. 1: eine Schnittansicht eines Teils eines erfindungsgemäßen Heißwasserbereiters mit einem Fühlerkörper aus wasserlöslichem Stoff,
- Fig. 2: eine Schnittansicht eines Teils eines erfindungsgemäßen Heißwasserbereiters mit einem nicht löslichen, verschieblichen Fühlerkörper.

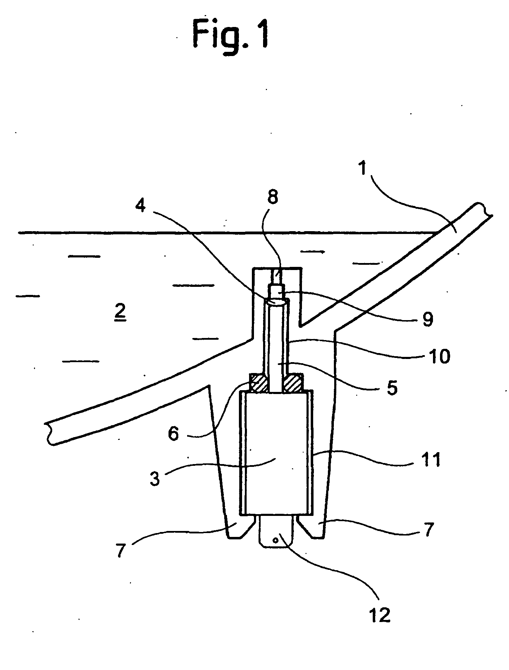

In Fig. 1 ist ein unterer Abschnitt eines Behälters 1 eines erfindungsgemäßen Heißwasserbereiters dargestellt. Der Behälter 1 weist zusätzlich nicht dargestellt einen Zulauf und einen Ablauf für Wasser 2 zum Anschluss an ein Wasserversorgungsnetz und eine Heizeinrichtung zum Erhitzen des Wassers 2 im Behälter 1 auf.

Der Behälter 1 weist im dargestellten unteren Bereich eine Öffnung 8 auf, die vom Behälterinnenraum in eine im wesentlichen zylindrische Aufnahme 9, 10, 11 führt, in der ein Fühlerkörper 4 und ein Schalter 3 mit einem Betätigungselement 5 in Gestalt einer zylindrischen Stange angeordnet sind. Der Fühlerkörper 4 besteht aus einem wasserlöslichen und ungiftigen Stoff, wie beispielsweise Zucker, Speisesalz oder Saccharin. Der Schalter 3 ist so ausgeführt, dass er das Betätigungselement 5 nach oben gegen den Fühlerkörper 4 vorspannt. Der Schalter 3 ist ausgeschaltet, wenn sich das Betätigungselement 5 in der dargestellten unteren Aus-Stellung befindet, und schaltet sich ein, wenn sich das Betätigungselement 5 nach oben in eine Ein-Stellung bewegt. In Fig. 1 wird das Betätigungselement 5 in der unteren Aus-Stellung von dem Fühlerkörper 4 gehalten, der ausreichend fest ist, um der Vorspannung des Betätigungselements 5 standzuhalten.

Die Aufnahme für den Schalter 3, das Betätigungselement 5 und den Fühlerkörper 4 weist drei untereinander angeordnete Abschnitte 9, 10, 11 auf. Ein oberster Abschnitt 9 schließt sich direkt an die Öffnung 8 an und besitzt einen Querschnitt, der im wesentlichen dem des Betätigungselements 5 entspricht und ein Eindringen zumindest des oberen Abschnitts des Betätigungselement 5 in den Abschnitt 9 ermöglicht. Unten an den Abschnitt 9 schließt sich ein mittleren Abschnitt 10 an, dessen Querschnitt größer als der des Betätigungselements 5 und des Abschnitts 9 und kleiner als der des Schalters 3 ist, so dass der Übergang vom mittleren Abschnitt 10 zu einem sich daran anschließenden untersten Abschnitt 11 einen Anschlag für den Schalter 3 bildet. Der Querschnitt des untersten Abschnitts 11 ist so groß bemessen, dass der Schalter 3 in diesen Abschnitt eingeführt werden kann. Zwischen dem mittleren Abschnitt 10 und dem untersten Abschnitt 11 ist weiterhin ein kleiner Absatz für einen Dichtring 6 ausgestaltet, der das Betätigungselement 5 gegen die Wand der Aufnahme 9, 10, 11 abdichtet und so zusammen mit dem Betätigungselement 5 den Behälter 1 dicht verschließt.

Um das Betätigungselement 5 in seiner Aus-Stellung zu halten, besitzt der Fühlerkörper 4 einen größeren Querschnitt als der oberste Aufnahmeabschnitt 9 und stützt sich mit seinem oberen Ende gegen den Absatz zwischen dem obersten Abschnitt 9 und dem mittleren Abschnitt 10 ab.

Die Wand des untersten Abschnitts 11 der Aufnahme 9, 10, 11 weist unten senkrecht verlaufende Längsschlitze auf, wobei die Wandabschnitte zwischen den Längsschlitzen in Rasthaken 7 zum Befestigen des Schalters 3 im untersten Aufnahmeabschnitt 11 enden. Zur Montage wird zunächst der Fühlerkörper 4 in die Aufnahme 9, 10, 11 bis in den mittleren Abschnitt 10 geschoben und dann der Schalter 3 mit seinem Betätigungselement 5 in den mittleren bzw. untersten Aufnahmeabschnitt 10 bzw. 11 eingeschoben und mittels der Rasthaken 7 verrastet. Anschließend kann der Stromkreis für die Heizeinrichtung über elektrische Anschlüsse 12 des Schalters 3 geschlossen werden.

Wenn nun der Heißwasserbereiter an das Wasserversorgungsnetz angeschlossen und die Wasserzufuhr geöffnet wird, strömt Wasser 2 in den Behälter 1 und füllt diesen. Solange der Stand des Wassers 2 im Behälter 1 unterhalb der Öffnung 8 liegt, kann kein Wasser 2 durch die Öffnung 8 und den obersten Aufnahmeabschnitt 9 zum Fühlerkörper 4 gelangen, so dass der Schalter 3 ausgeschaltet bleibt und die Heizeinrichtung nicht in Betrieb genommen werden kann.

Erreicht der Wasserstand die Öffnung 8, gelangt das Wasser 2 zum Fühlerkörper 4 und beginnt, diesen aufzulösen. Sobald der Fühlerkörper 4 ausreichend aufgelöst ist, um der Vorspannung des Betätigungselements 5 nicht mehr standhalten zu können, schiebt sich dieses in den obersten Aufnahmeabschnitt 9, wobei der Schalter 3 eingeschaltet wird und den Stromkreis für die Heizeinrichtung schließt. Die Öffnung 8 befindet sich oberhalb der Heizeinrichtung, so dass zu diesem Zeitpunkt bereits genügend Wasser 2 im Behälter 1 ist, damit selbst bei sofortiger Inbetriebnahme der Heizeinrichtung von dieser erzeugte Wärme vom Wasser 2 aufgenommen werden kann. Das obere Ende des Betätigungselements 5 wird von der Verspannung gegen den Rand der Öffnung 8 gedrückt, so dass dort von dem Betätigungselement 5 zum Verschluss des Behälters 1 zusätzlich zum Dichtring 6 eine weitere Dichtstelle geschaffen wird.

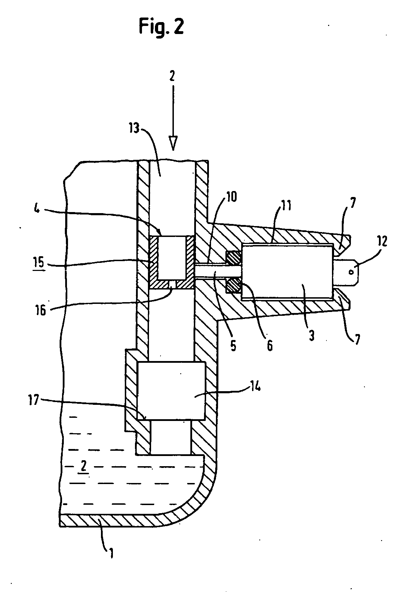

In Figur 2 ist ein unterer Abschnitt des Behälters 1 im Schnitt dargestellt. Entlang der Innenwand des Behälters 1 erstreckt sich zumindest ein Teil eines Wasserkanals 13. Der dargestellte Wasserkanal 13 ist in einem Zulauf zu dem Wassererhitzer angeordnet. Über den Wasserkanal 13 wird Wasser 2 über einen nicht dargestellten Anschluss an ein Wasserversorgungsnetz dem Innenraum des Behälters 1 zugeführt. An der Außenseite des Behälters 1 sind Rasthaken 7 vorgesehen, die zur Befestigung des Schalters 3 dienen. Der Schalter 3 weist das Betätigungselement 5 auf. Über den Abschnitt 10 ragt das Betätigungselement 5 in den Wasserkanal 13 hinein. Das unter Vorspannung gehaltene Betätigungselement 5 ragt in der Ein-Stellung des Schalters über die Wand hinweg in das Innere des Zulaufkanals hinein. In der dargestellten Position befindet sich der Schalter 3 in der Ausstellung. In Höhe des Schalters 3 befindet sich innerhalb des Wasserkanals 13 der Fühlerkörper 4.

Der Fühlerkörper 4 ist als hohler Zylinderkörper 15 ausgebildet. Der Zylinderkörper 15 weist eine Bodenfläche mit einer Öffnung 16 auf. Der Zylinderkörper 15 ist axial innerhalb des Wasserkanals 13 verschiebbar. In der in Figur 2 gezeigten Position befindet sich der Zylinderkörper 15 in seiner ersten Position. In dieser ersten Position ist das Betätigungselement 5 daran gehindert, in das Innere des Wasserkanals 13 einzudringen. In der gezeigten Position befindet sich der Schalter in der Aus-Stellung. Der Zylinderkörper 15 kann innerhalb des Wasserkanals 13 ein relativ großes Spiel aufweisen, da der Zylinderkörper 15 aufgrund der Vorspannung des Betätigungselement 5 im Wasserkanal 13 festgeklemmt ist. Wird Wasser 2 von oben in den Wasserkanal 13 geleitet, so wird aufgrund des entstehenden Staudruckes der Zylinderkörper 15 nach unten geschoben. Wird eine Öffnung 16 vorgesehen, so kann eine geringe Wassermenge in den Innenraum des Behälters 1 einströmen, obwohl sich der Zylinderkörper 15 noch in der ersten Position befindet. So kann eine gewisse Menge Wasser bereits in dem Innenraum des Behälters 1 einfließen noch bevor der Zylinderkörper 15 aus seiner Position geschoben ist. Wird ein großes Spiel zwischen dem Betätigungselement 5 und dem Wasserkanal 13 vorgesehen, kann zuströmendes Wasser in geringer Menge an dem Betätigungselement 5 vorbeiströmen. Bei dieser Variante erübrigt sich dann eine gesonderte Öffnung 16 im Boden des Betätigungselements 5. Die Bodenfläche kann auch ohne Öffnung 16 als geschlossener Boden ausgebildet sein. Bei anhaltendem Staudruck des zugeführten Wassers 2 verschiebt sich der Zylinderkörper 15 bis in einen Auffangraum 14. Im Auffangraum 14 kommt der Zylinderkörper 15 an einem Rückhaltemittel 17 am Auffangraum 14 zum Stehen. In der dargestellten Ausführungsform wird das Rückhaltemittel 17 durch einen Absatz innerhalb des Wasserkanals 13 gebildet. Dieser Absatz verengt am Ende des Auffangraumes 14 den Kanalverschnitt auf einen geringeren Durchmesser als der Durchmesser des Zylinderkörpers 15. Wenn sich der Zylinderkörper 15 im Auffangraum 14 befindet, wird ein Spaltraum gebildet, durch den zugeführtes Wasser 2 den Zylinderkörper 15 umspülen oder durchspülen kann, um in den Innenraum des Behälters 1 zu gelangen. Aufgrund des Rückhaltemittels 17 ist verhindert, dass der Zylinderkörper 15 in den Innenraum des Behälters ausgeschwemmt wird.

In Abhängigkeit von der Vorspannungskraft des Betätigungselements 15, welches gegen den Zylinderkörper 15 in der ersten Position drückt und in Abhängigkeit von der Größe der Öffnung 16 in der Bodenfläche des Zylinderkörpers 15 kann die Haltekraft, bzw. die Kraft zum Bewegen des Zylinderkörpers 15 vorbestimmt werden. Je nach vorbestimmter Kraft wird sich der Zylinderkörper 15 mehr oder weniger schnell aus der ersten Position herausbewegen und in den Auffangraum 14 bewegt werden. Diese zeitliche Verzögerung ermöglicht es, Wasser 2 in den Innenraum des Behälters 1 einzulaufen, noch bevor der Zylinderkörper 15 das Betätigungselement 5 freigibt und den Schalter in die Einstellung bewegt. Somit kann verhindert werden, dass die Heizeinrichtung eingeschaltet werden kann, bevor eine Mindestmenge an Wasser 2 in den Innenraum des Behälters 1 eingeflossen ist.

## Patentansprüche

1. Elektrischer Heißwasserbereiter mit einem Behälter (1) und einer elektrischen Heizeinrichtung zum Erhitzen des Wassers (2) im Behälter (1), welcher Heißwasserbereiter einen Schalter (3) mit einem Betätigungselement (5) aufweist, das gegen einen Fühlerkörper (4) in Richtung einer Ein-Stellung vorgespannt ist, in der der Schalter (3) eine Stromzufuhr für die Heizeinrichtung freigibt, wobei der Fühlerkörper (4) derart eingerichtet ist, dass er das Betätigungselement (5) des Schalters (3) ausschließlich im trockenen Zustand in einer Aus-Stellung hält, in der der Schalter (3) die Stromzufuhr für die Heizeinrichtung unterbricht, und der Fühlerkörper (4) mit dem Innenraum des Behälters (1) derart verbunden ist, dass in den Behälter strömendes Wasser (2) den Fühlerkörper (4) erreicht,
**dadurch gekennzeichnet, dass**
der Heißwasserbereiter so eingerichtet ist, dass der Fühlerkörper (4) durch einen Staudruck aufgrund des in den Behälter einströmenden oder ausströmenden Wassers (2) von einer ersten Position, in der das Betätigungselement (5) gegen den Fühlerkörper in Richtung der Ein-Stellung des Schalters (3) vorgespannt ist, in eine zweite Position, in der das Betätigungselement (5) des Schalters (3) in seine Ein-Stellung gelangen kann, versetzbar ist.

2. Elektrischer Heißwasserbereiter nach Anspruch 1, **dadurch gekennzeichnet, dass** der Fühlerkörper (4) als axial in einem Wasserkanal (13) verschiebbarer Zylinderkörper (15) ausgebildet ist.

3. Elektrischer Heißwasserbereiter nach Anspruch 2, **dadurch gekennzeichnet, dass** der Zylinderkörper (15) hohlzylindrisch ausgebildet ist und eine Bodenfläche mit einer Öffnung (16) aufweist.

4. Elektrischer Heißwasserbereiter nach einem der Ansprüche 1 bis 3, **dadurch gekennzeichnet, dass** der Fühlerkörper (4) in der zweiten Position in einem Auffangraum (14) aufgenommen ist und der Wasserkanal (13) für ein Durchströmen des Wassers (2) freigegeben ist.

5. Elektrischer Heißwasserbereiter nach einem der Ansprüche 2 bis 4, **dadurch gekennzeichnet, dass** der Auffangraum (14) als ein im Durchmesser erweiterter Teil des Wasserkanals (13) ausgebildet ist.

6. Elektrischer Heißwasserbereiter nach Anspruch 5, **dadurch gekennzeichnet, dass** der Auffangraum (14) einen Rückhaltemittel (17) aufweist, durch den ein Ausschwemmen des Fühlerkörper (4) aus dem Auffangraum (14) verhindert ist.

7. Elektrischer Heißwasserbereiter nach einem der Ansprüche 2 bis 6, **dadurch gekennzeichnet, dass** der Wasserkanal (13), der den Fühlerkörper (4) aufweist, in einem Zulauf für das Wasser (2) in den Innenraum des Behälters (1) angeordnet ist und der Fühlerkörper (4) in seiner ersten Position ein in den Zulauf hineinragendes Betätigungselement (5) des Schalters (3) in seiner Aus-Stellung hält.

8. Elektrischer Heißwasserbereiter nach einem der Ansprüche 2 bis 6, **dadurch gekennzeichnet, dass** der Wasserkanal (13), der den Fühlerkörper (4) aufweist, in einem Auslauf für das Wasser (2) aus dem Innenraum des gefüllten Behälters (1) angeordnet ist und der Fühlerkörper (4) in seiner ersten Position ein in den Auslauf hineinragendes Betätigungselement (5) des Schalters (3) in seiner Aus-Stellung hält.

## Claims

1. Electric hot water heater comprising a container (1) and an electric heating device for heating the water (2) in the container (1), which hot water heater comprises a switch (3) with an actuating element (5) biased against a detector body (4) in the direction of an 'on' setting in which the switch (3) frees a current feed for the heating device, wherein the detector body (4) is equipped in such a manner that it keeps the actuating element (5) of the switch (3) exclusively in the dry state in an 'off' setting in which the switch (3) interrupts the current feed for the heating device, and the detector body (4) is connected with the interior space of the container (1) in such a manner that water (2) flowing into the container reaches the detector body (4), **characterised in that** the hot water heater is so equipped that the detector body (4) is displaceable by way of the water (2), which flows into or flows out of the container, from a first position in which the actuating element (5) is biased against the detector body in the direction of the 'on' setting of the switch (3) into a second position in which the actuating element (5) of the switch (3) can go into its 'on' setting.

2. Electric hot water heater according to claim 1, **characterised in that** the detector body (4) is constructed as a cylinder body (15) axially displaceable in a water channel (13).

3. Electric hot water heater according to claim 2, **characterised in that** the cylinder body (15) is of hollow-cylindrical construction and has a base surface with an opening (16).

4. Electric hot water heater according to one of claims 1 to 3, **characterised in that** the detector body (4) is received in the second position in a connecting space (14) and the water channel (13) is freed for a throughflow of the water (2).

5. Electric hot water heater according to one of claims 2 to 4, **characterised in that** the collecting space (14) is formed as a part of enlarged diameter of the water channel (13).

6. Electric hot water heater according to claim 5, **characterised in that** the collecting space (14) has a restraining means (17) by which floating of the detector body (4) out of the collecting space (14) is prevented.

7. Electric hot water heater according to one of claims 2 to 6, **characterised in that** the water channel (13) having the detector body (4) is arranged in a feed for the water (2) into the interior space of the container (1) and the detector body (4) in its first position holds an actuating element (5), which projects into the feed, of the switch (3) in its 'off' setting.

8. Electric hot water heater according to one of claims 2 to 6, **characterised in that** the water channel (13) having the detector body (4) is arranged in an outlet for the water (2) from the interior space of the filled container (1) and the detector body (4) in its first position holds an actuating element (5), which projects into the outlet, of the switch (3) in its 'off' setting.

## Revendications

1. Chauffe-eau électrique qui présente un récipient (1) et un dispositif électrique de chauffage pour chauffer l'eau(2) dans le récipient (1), lequel chauffe-eau présente un commutateur (3) doté d'un élément d'actionnement (5) précontraint contre un corps de sonde (4) en direction d'une position de branchement dans laquelle le commutateur (3) libère l'apport de courant pour le dispositif de chauffage, le corps de sonde (4) étant conçu de manière à, exclusivement dans l'état sec, maintenir l'élément d'actionnement (5) du commutateur (3) dans une position de débranchement dans laquelle le commutateur (3) interrompt l'apport de courant pour le dispositif de chauffage, le corps de sonde (4) étant relié à l'espace intérieur du récipient (1) de manière à ce que l'eau (2) qui pénètre dans le récipient atteigne le corps de sonde (4),
**caractérisé en ce que**
le chauffe-eau est conçu de telle sorte que le corps de sonde (4) peut être déplacé depuis une première position, dans laquelle l'élément d'actionnement (5) est précontraint contre le corps de sonde en direction de la position de branchement du commutateur (3), jusque dans une deuxième position, dans laquelle l'élément d'actionnement (5) du commutateur (3) peut passer dans sa position de branchement sous l'action de la pression dynamique qui résulte de l'eau (2) qui pénètre dans le récipient ou qui quitte le récipient.

2. Chauffe-eau électrique selon la revendication 1, **caractérisé en ce que** le corps de sonde (4) est configuré comme corps cylindrique (15) qui peut être déplacé axialement dans un canal d'eau (13).

3. Chauffe-eau électrique selon la revendication 2, **caractérisé en ce que** le corps cylindrique (15) a la forme d'un cylindre creux et présente une surface de fond dotée d'une ouverture (16).

4. Chauffe-eau électrique selon l'une des revendications 1 à 3, **caractérisé en ce que** lorsque le corps de sonde (4) se trouve dans la deuxième position, il est logé dans un espace de réception (14), et **en ce que** le canal d'eau (13) est libéré pour permettre le passage de l'eau (2).

5. Chauffe-eau électrique selon l'une des revendications 2 à 4, **caractérisé en ce que** l'espace de réception (14) est configuré comme partie de plus grand diamètre du canal d'eau (13).

6. Chauffe-eau électrique selon la revendication 5, **caractérisé en ce que** l'espace de réception (14) présente un moyen de retenue (17) qui empêche que le corps de sonde (4) sorte de l'espace de réception (14).

7. Chauffe-eau électrique selon l'une des revendications 2 à 6, **caractérisé en ce que** le canal d'eau (13) qui présente le corps de sonde (4) est disposé dans l'entrée de l'eau (2) dans l'espace intérieur du récipient (1) et **en ce que** dans sa première position, le corps de sonde (14) maintient dans sa position de débranchement l'élément d'actionnement (5) du commutateur (3), lequel élément d'actionnement dépasse dans l'entrée.

8. Chauffe-eau électrique selon l'une des revendications 2 à 6, **caractérisé en ce que** le canal d'eau (13) qui présente le corps de sonde (4) est disposé dans la sortie d'eau (2) hors de l'espace intérieur du récipient (1) rempli et **en ce que** dans sa première position, le corps de sonde (4) maintient dans sa position de débranchement l'élément d'actionnement (5) du commutateur (3), lequel élément d'actionnement dépasse dans la sortie.
